# EUROPEAN PATENT APPLICATION

(11) **EP 2 071 803 A1**
(43) Date of publication of application: **17.06.2009**
(21) Application number: 07291496.3
(22) Date of filing: 12.12.2007
(51) Int. Cl.: H04L 29/06, H04W 4/00, H04L 12/56

(54) **A radio network controller and associated method for multi-layer information delivery**

(71) Applicant: Alcatel Lucent, 75008 Paris (FR)
(72) Inventor: Sayadi, Bessem, 92330 Sceaux (FR); Kerboelf, Sylvaine, 91140 Villebon-sur-Yvette (FR); Alberi-Morel, Marie-Line, 94230 Cachan (FR)
(74) Representative: Plas, Axel Ivo Michel

(57) **Abstract**

The present invention relates to a radio network controller for controlling delivery of multi-layer information to a user equipment through a plurality of base stations. The multi-layer information comprising a first layer and a second layer of information and the radio network controller comprises means for controlling delivery of the first layer through a first selection out of the plurality of base stations and for controlling delivery of the second layer through a second selection out of the plurality of base stations. The radio network controller further comprises means for receiving availability information from the user equipment and further in that the means for controlling delivery are adapted for making the first selection and the second selection based on the availability information.

## Description

### Field of the Invention

The present invention generally relates to delivery of information to user equipment and more in particular to controlling the delivery of layered information to user terminals in wireless communication networks.

### Background of the Invention

Communication networks and more in particular wireless communication networks are typically made up out of a number of base stations which are interconnected through a wireless or wired network. These base stations furthermore provide a point of access to various pieces of user equipment. For instance, a mobile telephone network consists of a large number of antenna's with which mobile telephones can communicate for sending and receiving telephone calls, messages, etc. Such networks typically also contain a node which controls the delivery of information from particular sources to particular destinations. One example of such node is a Radio Network Controller (RNC) which is responsible for determining where a particular piece of information has to go and for organizing or controlling the delivery of that piece information to the correct base station which can forward the information to the corresponding user equipment.

Typically communication networks are limited in the available bandwidth between various nodes. In the above situated scenario, the limitation is often found between a base station and the user equipment. Bandwidth of existing wireless communication technologies is typically lower than the bandwidth of wired communication technologies such as optical fibres or high speed copper links. For information such as telephone calls or short messages, the bandwidth is no issue during regular usage. Bandwidth may then become a problem during peak time, for instance during holidays when a lot of people are communicating with each other or during special events where a lot of people are involved and communicate through the same base station. However media streaming such as streaming video may suffer from bandwidth shortages.

One known way of dealing with the bandwidth limitation when streaming video is the use of layered video information. Layered video information implies that the video information is divided into multiple layers, each adding different features to the video stream when the layers are combined again. For instance Movie and Pictures Experts Group (MPEG) encoded information which is made up out of multiple types of frames may be considered as layered video information. MPEG information consists of various types of frames which depend on each other. A key frame is required to be able to decode any of the other frames whereas other types of frames could be left by reducing video quality .. This could be used to deal with bandwidth limitations by not sending the least important frames. Other schemes for layered video information may be used wherein layers do not depend on each other but wherein layers are used to improve the overall video information after decoding. A similar concept is Scalable Video Coding as described in a paper titled "Overview of the Scalable Video Coding Extension of the H.264/AVC Standard" by Heiko Schwarz, Detlev Marpe and Thomas Wiegand which was published in IEEE Transactions on circuits and systems for video technology, vol. 17, no. 9, September 2007.

A paper titled "An End-to-End Multi-Path Smooth Handoff Scheme for Stream Media" by Ji Pan et. al. describes the use of multi-layer encoded video streams in wireless communication networks. More in particular the paper describes how encoding of multiple layers of video information is based on end-to-end bandwidth estimations and how the various layers are then transported over multiple paths through a wireless communication network.

A problem with the described solution in the paper is that the solution is based on an end-to-end bandwidth estimation. This estimation is then used in video encoding to obtain layers suited for particular paths and to determine which paths can be used. However an end-to-end bandwidth estimation causes additional load on the communication network. Thus the available bandwidth in the communication network is reduced even more to determine how the video information has to be encoded and through which paths it can be delivered to the user equipment. Another drawback of the described solution is that it may take additional time to perform the end-to-end estimation. During such time the reduced bandwidth may lead to additional degradation of the perceived quality of the media stream.

It is an objective of the present invention to provide a system for media delivery in a communication network with less overhead. It is another objective of the present invention to improve the reliability and quality of delivery of layered media in communication networks.

### Summary of the Invention

The drawbacks of the prior art solution are overcome and the objectives of the present invention are realized by a radio network controller for controlling delivery of multi-layer information to a user equipment through a plurality of base stations, the multi-layer information comprising a first layer and a second layer of information and the radio network controller comprising means for controlling delivery of the first layer through a first selection out of the plurality of base stations and for controlling delivery of the second layer through a second selection out of the plurality of base stations, characterized in that the radio network controller further comprises means for receiving availability information from the user equipment and further in that the means for controlling delivery are adapted for making the first selection and the second selection based on the availability information.

Indeed, by receiving the availability information from the user equipment, the overhead on the communication network and more specifically on the available bandwidth in the communication network is reduced. In addition, the user equipment provides the information to the Radio Network Controller (RNC) and thus is able to provide updates of the availability information when such updates are available.

The communication network typically consists of a number of base stations, each base station covering one or more cells. These cells are to be considered as areas wherein a particular configuration is used for communication between user equipment and a base station. Such configuration may for instance define the exact frequency band used in a particular cell. The cells generally use non-overlapping frequency bands or orthogonal frequency ranges to avoid interference between two particular cells such as adjacent cells. During a normal operation of user equipment, it communicates with one particular base station in a particular cell and the user equipment communicates with that particular base station until certain conditions are met. For instance, if the user equipment is moved to a different geographical location or cell, it may be better to communicate with a different base station. Generally, user equipment is able to detect various base stations in a cell, even base stations not covering the cell wherein the base station resides. The user equipment is then able to select a particular base station based on the detected base stations. The list of available base stations makes up the availability information.

The result is that the RNC is able to learn from the availability information which base stations can be used to reach the user equipment. The advantage of less overhead is achieved by providing the information to the RNC by the user equipment. This may be done in a single communication wherein the user equipment provides the list to the RNC. This can also reduce the timeframe wherein information is gathered, information needed to control the delivery of the multi-layer information. A user equipment typically needs to determine the availability information for its own use, for instance to select the most appropriate base station to communicate with. Thus, sending that information to the RNC does not take a lot of additional time or effort. In addition, the user equipment already has the ability to obtain the availability information and the ability to deliver information to the RNC thus little adaptation is required on the user equipment side. This means that the advantages of the present invention may also be used in older user equipment which opens up new possibilities for services to operators.

A second major advantage of the present invention is that it is able to improve the quality of media in communication networks and more in particular of media streams. The multi-layer information which makes up a media stream may consist of two different types of layers, each having their own function. Consequentially it may be beneficial to deliver these two types through different base stations. For instance, the first layer may be delivered through a first selection of base stations wherein the first selection is made up out of a number of the base stations in the availability information of user equipment. The second layer may be delivered through a second selection of base stations wherein the second selection is also made up out of a number of the base stations in the availability information. The first and second selection may be overlapping or may be completely different. Thus, it is possible that one or more base stations are used to deliver both first and second layer information or it is possible that both layers are delivered by a complete different set of base stations.

The quality of the media stream can then be improved by using multiple base stations to deliver the layers of information, not only during handoff but as long as there is multi-layer information to deliver. By using multiple base stations to deliver parts of the multi-layer information, it becomes possible to deliver more data to a single user equipment. Two layers of information need to be transported, each containing a part of the information. These two layers require a specific amount of bandwidth and the maximum size of these layers is defined by the available bandwidth in a particular cell. Thus, by delivering the two layers through two different base stations, the total available bandwidth is increased. This means that either each layer may contain more information or that more layers may be transmitted to the user equipment.

Optionally, the availability information comprises one or more of the following:
- available base stations whereto the user equipment is able to communicate;
- bandwidth available between the user equipment and the available base stations; and
- signal strength between the user equipment and the available base stations.

These elements provide valuable information to the RNC in order to make a good selection of base stations through which information may be delivered. The available base stations indicates which base stations can be considered for delivery of information to the user equipment. These base stations may be ordered according to the preference of the user equipment. This way the RNC can select the base stations to control the delivery of information in the same order wherein the base stations are listed in the availability information. Alternatively, the availability information lists the available base stations and other parameters such as the bandwidth available between the user equipment and the base stations or the signal strength perceived by the user equipment or other information such as Signal-to-Noise Ratio, Bit Error Rare, etc. Such information, either a single element or a combination thereof may be valuable to the RNC in determining the most appropriate base stations that can be used to deliver the multi-layer information.

Alternatively, the user equipment provides the RNC with the base stations seen by the user equipment and the perceived signal strength to these base stations. The RNC may then be able to determine which bandwidth is available between each base station and the user equipment. After determining the available bandwidth, the RNC is able to combine that information with the information related to the bandwidth needed for streaming the information to make a selection of base stations.

Optionally the first layer is a base layer useable for decoding video information for playback. Further optionally, the said second layer is an enhancement layer useable for improving the playback quality of video information.

Media streams may consists of various types of media. However video is the most difficult type of media to stream or deliver through communication networks as video information is typically demanding in resources and quality of the communication network. By using a multi-layer video format such as the Scalable Video Coding (SVC), video information is split in a base layer and an enhancement layer. The base layer provides the basic information required for decoding video information from the received information. The enhancement layer can be used to improve the quality of the video information. Thus, if a user equipment only receives the base layer, it can display a lower quality version of the video. If it receives only an enhancement layer, it cannot display any video information and if it receives both it can display video of high quality.

As stated before, transmission of the base layer via a first selection of base stations and transmission of the enhancement layer via a second selection of base stations allows for a large amount of information to be contained in each layer. To avoid problems during handoff or to reduce the chance of corrupted video due to errors, it may be beneficial to duplicate the base layer over more than one base station and only deliver the enhancement layer over a single base station. This way, the user equipment would receive the base layer from multiple sources which means that if one copy is corrupted, the user equipment can use another copy. The enhancement layer can then be received from a base station which also delivers the base layer or from a different base station.

Optionally the multi-layer information comprises at least a third layer, the third layer being an enhancement layer different from the second layer the radio network controller is adapted to control delivery of the third layer through a third selection of base stations.

A single base layer and enhancement layer may be used to deliver video information in the communication network through various base stations to obtain a better quality. However, some base stations may not be as powerful as other base stations. For instance, some base stations may be limited in their transmission capacities or have reduced resources. Some user equipment may be less powerful, for instance older pieces may not have access to high bandwidth technologies and may therefore be unable to handle high bandwidth video information.

Therefore it may be beneficial to add at least a third layer to the multi-layer information which is also an enhancement layer. The third layer is different from the second layer in that it adds different improvements to the video information. For instance the first layer contains the essential information for decoding the video information, the second layer contains major improvements on the quality of the video information and the third layer contains minor improvements to the quality. Thus, by adding more layers the video information may be divided in several pieces and each piece of user equipment may receive enough layers to display the best achievable quality of video.

The delivery of the third layer also requires base stations to be used. The RNC may select a third selection of base stations from the available base stations. This third selection may overlap with the first and/or the second selection or maybe completely different from any other selections.

Of course there may be more than three layers, each having their own selection of base stations or additional layers sharing their selection of base stations with other layers. For instance in a scenario with 4 layers, the first and third layer may share the first selection of base stations, i.e. the third selection is the same as the first selection, and the second and fourth layer may use the second selection of base layers. In general, there is no requirement to have two or three layers, there may be N layers with two, three or more selections of base stations useable to deliver N layers.

Optionally the radio network controller is adapted to form part of a wireless communication network.

A wireless communication network is typically a communication network wherein limited bandwidth is a problem and especially for the delivery of high quality video information. By incorporating the RNC of the present invention in a wireless communication network, the communication network becomes more effective in the delivery of high quality video information without major changes in the hardware of the network or the configuration thereof. Thus, the RNC according to the present invention is able to improve the service in existing wireless communication networks without a lot of investment or changes in hardware.

The present invention further relates to a user equipment for receiving multi-layer information through a plurality of base stations, the multi-layer information comprising a first layer and a second layer of information, the user equipment being adapted for receiving the first layer through a first selection out of the base stations and for receiving said second layer through a second selection out of the base stations and the user equipment comprising means for determining availability information, characterized in that the user equipment is adapted to transfer the availability information to a radio network controller in order to enable the radio network controller to make the first selection and the second selection based on the availability information.

The user equipment such as a mobile telephone, personal digital assistant (PDA), portable computer, etc. is able to determine which base stations can be reached and what the available resources towards these base stations are. The user equipment typically uses that information to define its own communication settings such as which base station to communicate with and the parameters for such communication. By adding the functionality to transmit that information to the RNC, the user equipment enables the RNC to make selections for the delivery of the various layers of the multi-layer information.

The present invention further also relates to a method for controlling delivery of multi-layer information to a user equipment through a plurality of base stations, the multi-layer information comprising a first layer and a second layer of information and the method comprising the step of controlling delivery of the first layer through a first selection out of the plurality of base stations and the step of controlling delivery of the second layer through a second selection out of the plurality of base stations, characterized in that the method further comprises the step of receiving availability information from the user equipment and the step of making the first selection and the second selection based on the availability information.

### Brief Description of the Drawings

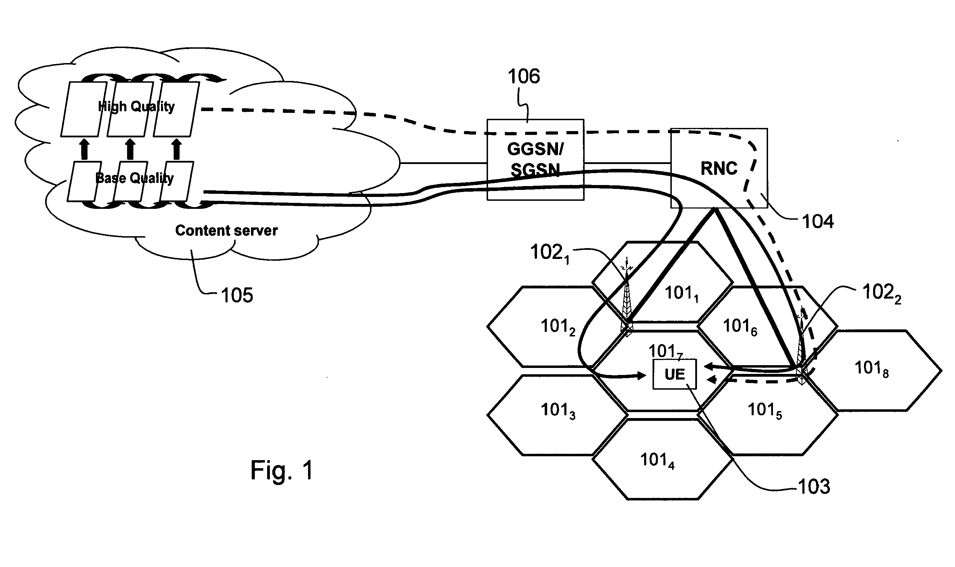

Fig. 1 illustrates a network topology of a wireless communication network wherein an embodiment of the present invention is used;

### Detailed Description of Embodiment(s)

Fig. 1 illustrates a topology of a communication network made up out of a number of cells 101₁ to 101₈, each cell being covered by a base station such as 102₁ or 102₂. In this particular embodiment each base station covers a number of cells, however it may be possible to have more or less base stations than those shown for this number of cells. A user is currently located in cell 101₇ with his User Equipment (UE) 103 which for instance can be a mobile telephone or a Personal Digital Assistant (PDA). Each of the base stations 102₁ and 102₂ provides network access to all the User Equipment in the cells 101₁ to 101₈ and in this example that access can be used to retrieve multimedia content from the content server 105. The content server 105 can be reached by the UE 103 through one or more intermediate gateways such as GGSN/SGSN 106. The radio network controller (RNC) 104 controls the delivery of the multimedia content from the content server to the appropriate UE 103.

In this particular example the multimedia content is streaming video which is retrieved by UE 103 from the content server 105. The multimedia content is divided in multiple layers of which two are shown in Fig. 1. The first layer is a base layer which is indicated by a full black arrow in the figure and the second layer is an enhancement layer which is indicated by a dashed black arrow. The content server 105 transmits the base layer and the enhancement layer towards the UE 103. Intermediate gateways such as GGSN/SGSN 106 enable the delivery of the layers and RNC 104 controls the delivery of the base layer and the enhancement layer. The RNC 104 determines through which base stations the layers are delivered. In this particular case, the base layer is delivered through base station 102₁ and 102₂ simultaneously and the enhancement layer is only delivered through base station 102₂.

The RNC 104 has learned from the UE 103 that base stations 102₁ and 102₂ are available and most suited for the delivery of the multi-layer video information. For instance UE 103 has sent a message to RNC 104 wherein it informs RNC 104 of the base stations 102₁ and 102₂ seen by it. The RNC 104 in turn is aware of the available resources at each base station 102₁ and 102₂. In this particular case UE 103 has determined that base stations 102₁ and 102₂ can be used for communication. In addition, UE 103 has determined the available resources such as signal strength to each of these base stations 102₁ and 102_{2.} The base station 102₁ provides the most bandwidth and is thus used to deliver the base layer to the UE 103. If enough bandwidth is available, additional layers may be delivered through the same base station 102₁, else the RNC will select the next base station with the most bandwidth available, base station 102_{2.} In this particular example the base layer is transmitted to both base stations for redundancy. However this may not be the case in alternative embodiments and is thus not mandatory for a correct operation of the RNC or the system for the delivery of the media content.

In general, the RNC selects the base stations according to the needs of the multi-layer information. The base layer may be duplicated over several base stations and the enhancement layers can be distributed over the available base stations according to the available bandwidth. Thus the RNC may fill the bandwidth of a first base station before moving on to the next best base station for additional layers.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A radio network controller for controlling delivery of multi-layer information to a user equipment through a plurality of base stations, said multi-layer information comprising a first layer and a second layer of information and said radio network controller comprises means for controlling delivery of said first layer through a first selection out of said plurality of base stations and for controlling delivery of said second layer through a second selection out of said plurality of base stations,
**characterized in that** said radio network controller further comprises means for receiving availability information from said user equipment and further **in that** said means for controlling delivery are adapted for making said first selection and said second selection based on said availability information.

2. The radio network controller according to claim 1, **characterized in that** said availability information comprises one or more of the following:
- available base stations whereto said user equipment is able to communicate;
- bandwidth available between said user equipment and said available base stations; and
- signal strength between said user equipment and said available base stations.

3. The radio network controller according to claim 1, **characterized in that** said first layer is a base layer useable for decoding video information for playback.

4. The radio network controller according to claim 1,
**characterized in that** said second layer is an enhancement layer useable for improving the playback quality of video information.

5. The radio network controller according to claim 4, **characterized in that** said multi-layer information comprises at least a third layer, said third layer being an enhancement layer different from said second layer and **in that** said radio network controller is adapted to control delivery of said third layer through a third selection of base stations.

6. The radio network controller according to claim 1,
**characterized in that** said radio network controller is adapted to form part of a wireless communication network.

7. A user equipment for receiving multi-layer information through a plurality of base stations, said multi-layer information comprising a first layer and a second layer of information, said user equipment being adapted for receiving said first layer through a first selection out of said base stations and for receiving said second layer through a second selection out of said base stations and said user equipment comprising means for determining availability information, **characterized in that** said user equipment is adapted to transfer said availability information to a radio network controller in order to enable said radio network controller to make said first selection and said second selection based on said availability information.

8. A method for controlling delivery of multi-layer information to a user equipment through a plurality of base stations, said multi-layer information comprising a first layer and a second layer of information and said method comprising the step of controlling delivery of said first layer through a first selection out of said plurality of base stations and the step of controlling delivery of said second layer through a second selection out of said plurality of base stations,
**characterized in that** said method further comprises the step of receiving availability information from said user equipment and the step of making said first selection and said second selection based on said availability information.
